# EUROPEAN PATENT APPLICATION

(11) **EP 0 970 931 A1**
(43) Date of publication of application: **12.01.2000**
(21) Application number: 99305244.8
(22) Date of filing: 02.07.1999
(51) Int. Cl.: C04B 18/08

(54) **Compositions useful for suppressing efflorescence on mineral substrates**

(30) Priority: 08.07.1998 US 92448 P
(71) Applicant: ROHM AND HAAS COMPANY, Philadelphia, Pennsylvania 19106-2399 (US)
(72) Inventor: Bowe, Michael Damian, Newtown, PA 18940 (US); Hsin, Roger Shan Chung, North Wales, PA 19454 (US)
(74) Representative: Buckley, Guy Julian

(57) **Abstract**

A composition comprising:
a) fly ash comprising less than 30 % by weight lime;
b) polymeric additive having a Tg of above -40°C in an amount of from 5 to 30 % by weight polymer solids based on the total weight of fly ash;
c) water in crystalline or liquid form; and, optionally,
d) inorganic additive selected from inert filler and pigment in an amount of up to 50 % by weight based on the total weight of fly ash;
and wherein other than said fly ash, said composition consists essentially of no other pozzolanic or cementitious material;
is suitable for use in suppressing efflorescence on the surfaces of mineral substrates such as precast concrete roof tiles, floor tiles, wall tiles, and house sidings.

## Description

This invention is concerned with compositions useful for suppressing efflorescence on mineral substrates. More particularly, though not exclusively, this invention concerns compositions useful for suppressing efflorescence on concrete substrates, such as concrete pipes, roof tiles, floor tiles, wall tiles and house sidings.

Precast concrete roof tiles are typically produced from a concrete mortar whose consistency is such that it can be molded whilst in its green state into a design having features of shape, configuration, pattern or ornament which it will retain when cured. The tiles are usually formed of a layer or layers of green concrete molded to correspond to the desired surface appearance of the tiles. The tiles may be formed of a single layer of concrete or they may be formed of multiple layers of concrete, for example as disclosed in US-A-4789319, US-A-4986744 and US-A-5017320.

Where a smooth finish on the upper surface of the tile is desired, the tile usually comprises at least two layers, the upper most layer being formed from a green concrete or cementitious slurry, comprising hydraulic cement, fine-grained aggregates, pigments and dispersing agents. This upper most layer has a thickness typically from 0.05 mm to no more than 3 mm and may be applied to the coarser base layer(s), for example, by a process such as described in any of the above US patents or by curtain coating the formed tile.

Concrete roof tiles tend to be susceptible to efflorescence when exposed to atmospheric moisture or precipitation.

To suppress efflorescence in concrete roof tiles, it has been common practice to coat the upper side of the concrete roof tiles with an aqueous paint or clear coat composition which, when dry, provides a waterproof coating. Such aqueous paint compositions will typically comprise from 30 to 50% by weight of polymer dispersion, for example an aqueous, acrylate-based polymer dispersion, from 20 to 60% by weight fine inorganic filler, for example chalk, barytes and/or silica, and optionally from 2 to 10% by weight iron oxide pigment. Such aqueous clear coat compositions typically consist essentially of a 100% acrylic dispersion (e.g 30 - 50% solids). Coatings formed from such paint and clear coat compositions tend to have a thickness on the tile of no greater than 0.05 mm. Improved efflorescence suppression has been proposed through the use of relatively more complex copolymer dispersions, such as those described in DE-A-4341260 and US-A-5215827, as replacements in whole or in part for the more conventional simple acrylate-based polymer dispersions. Over a period of time, however, exposure to the elements tends to cause the paint or clear coat to deteriorate and to flake-off the tile, thereby leaving the tile susceptible to efflorescence.

It is an object of the invention to provide a finished roof tile which has a reduced susceptibility to efflorescence over a longer period of time than conventional finished tiles, and which preferably does not essentially require coating with a separate, efflorescence-reducing paint or clear coat composition.

US-A-4240952 discloses a method of making concrete comprising the steps of mixing together a quantity of cementitious material, which may be all fly ash, aggregate, gypsum, calcium chloride and water. The concrete may also comprise a small quantity of latex emulsion. This concrete would be susceptible to efflorescence.

US-A-4375489 discloses a curable polymer concrete composition comprising a vinyl ester resin composition, aggregate including an amount of sand and an equal or smaller amount of fly ash, and a free radical curing agent. US-A-4997484 discloses a hydraulic cement, consisting essentially of fly ash, alkali metal activator, and citric acid, which is then admixed with sand or aggregate to form a mortar or concrete, respectively. US-A-5601643 discloses a cementitious binder mixture comprising fly ash and an alkali metal or alkaline earth metal silicate binder. There is no disclosure or suggestion in any of these documents that the cement could be used for suppressing efflorescence in a concrete.

In accordance with the present invention, there is provided a composition, suitable for use in suppressing efflorescence, comprising:
a) fly ash comprising less than 30 % by weight lime;
b) polymeric additive having a Tg of above -40°C in an amount of from 5 to 30 % by weight polymer solids based on the total weight of fly ash;
c) water in crystalline or liquid form; and, optionally,
d) inorganic additive selected from inert filler and pigment in an amount of up to 50 % by weight based on the total weight of fly ash;
and wherein other than said fly ash said composition consists essentially of no other pozzolanic or cementitious material. Preferably, the composition consists essentially of components a), b), c) and, optionally, d).

In accordance with another aspect of the present invention, there is provided a method for suppressing efflorescence on the surface of a mineral substrate, which method comprises
i) applying an aqueous composition comprising:
   a) fly ash comprising less than 30 % by weight lime;
   b) polymeric additive having a Tg of above -40°C in an amount of from 5 to 30 % by weight polymer solids based on the total weight of fly ash;
   c) water in liquid form; and, optionally,
   d) inorganic additive selected from inert filler and pigment in an amount of up to 50 % by weight based on the total weight of fly ash;
   and wherein other than said fly ash said composition consists essentially of no other pozzolanic or cementitious material; to at least one surface of said substrate and in such an amount that said composition forms a continuous layer having a thickness of from 0.05 mm to 3 mm over said substrate, and
ii) curing said composition until all the water in liquid form has evaporated or become water in crystalline form. Preferably, the composition consists essentially of components a), b), c) and, optionally, d). Preferably, curing of the composition is effected at a temperature of 50°C or more.

Surprisingly, we have found that a concrete roof tile which comprises an uppermost layer of the composition of the present invention tends not to be susceptible to significant efflorescence. Indeed, we have found that efflorescence in the tile can be suppressed to such an extent that it is not necessary to coat the tile with a paint or clear coat composition.

Preferably, the composition of the present invention is used to suppress efflorescence on the surface of mineral substrates. However, the composition may also be used to provide corrosion resistant and fireproof coatings on, for example, metal substrates.

The composition of the present invention is preferably used to suppress efflorescence on surfaces of concrete substrates, most preferably on substrates such as concrete pipes, roof tiles, floor tiles, wall tiles and house sidings.

In accordance with a third aspect of the present invention, there is provided a precast concrete plate comprising at least one layer formed from a green concrete and an uppermost layer having a thickness of from 0.05 mm to 3 mm of formed from a composition comprising:
a) fly ash comprising less than 30 % by weight lime;
b) polymeric additive having a Tg of above -40°C in an amount of from 5 to 30 % by weight polymer solids based on the total weight of fly ash;
c) water in crystalline or liquid form; and, optionally,
d) inorganic additive selected from inert filler and pigment in an amount of up to 50 % by weight based on the total weight of fly ash;
wherein other than said fly ash said composition consists essentially of no other pozzolanic or cementitious material. Preferably, the composition consists essentially of components a), b), c) and, optionally, d). The plate is preferably a roof tile, floor tile, wall tile or house siding.

The precast concrete plate of this embodiment may be manufactured by a process which allows plates to be obtained comprised of superimposed layers of mortars of different compositions and characteristics. For example, such a process and apparatus for performing the process are described in US-A-5017320 and US-A-4789319, respectively. The apparatus disclosed in US-A-4986744 may also be used for the manufacture of such multi-layered plates. The layer of concrete which comprises the bottom surface of the plate is prepared by mixing mortar composition to form the green concrete which, in accordance with the above process, is then extruded onto a continuous strand of moving bottom molds. Subsequently, if required, one or more other layers of green concrete are extruded onto the first layer to form a multi-layered plate. Finally, a layer of the composition of the present invention is extruded onto the sublayer(s) to form the uppermost layer of the plate. The multi-layered plate of green concrete and composition of the present invention is then cured in a conventional manner.

As an extra precaution against efflorescence, the uppermost surface of the precast concrete plates of the present invention may coated with a paint or clear coat composition in a conventional manner.

The fly ash used in the present invention may be Class C- Fly Ash or Class F-Fly Ash or a mixture of these fly ashes. Preferably, Class F-Fly Ash is used.

The polymeric additive preferably has a Tg of at least about -20°C, more preferably at least 0°C. Preferably, the Tg of the polymeric additive is no more than 70°C, more preferably no more than 45°C.

The polymeric additive is preferably present in the composition in an amount of from 5 to 20% by weight polymer solids based on the total weight of fly ash. More preferably, the polymeric additive is present in an amount of from 5 to 15% by weight polymer solids based on the total weight of fly ash.

The polymeric additive is an organic polymer. There are many commercially available organic polymers sold as cement modifiers. Provided such polymers have a Tg of above -40°C, it is believed they will be suitable for use in the manufacture of the plates of the present invention.

Preferably the polymeric additive is from a polymer latex. The latex may be a dispersed polymer having its particles dispersed in an aqueous evaporable carrier, a water-reducible polymer, or a mixture thereof in the aqueous evaporable carrier. The aqueous evaporable carrier is preferably water but may be water having dissolved therein a water or polymer miscible organic solvent, such as methanol, ethanol or a glycol ether.

The polymeric additive may from be a latex emulsion or powder comprising a polymer polymerized from at least one or more of the following monomers: acrylic and methacrylic acid esters such as methyl(meth)acrylate, ethyl(meth)acrylate, butyl(meth)acrylate, 2-ethylhexyl(meth)acrylate, decyl(meth)acrylate, lauryl(meth)acrylate, isobornyl(meth)acrylate, isodecyl(meth)acrylate, oleyl(meth)acrylate, palmityl(meth)acrylate, steryl(meth)acrylate, hydroxyethyl(meth)acrylate and hydroxypropyl(meth)acrylate; acid functional monomers such as acrylic acid, methacrylic acid, crotonic acid, fumaric acid and maleic acid; mono-methyl itaconate; mono-methyl fumarate; monobutyl fumarate; maleic anhydride; acrylamide or substituted acrylamides; diacetone acrylamide; glycidyl methacrylate; acetoacetoxyethylmethacrylate; acrolein and methacrolein; dicyclopentadienyl methacrylate; dimethyl meta-isopropenyl benzyl isocyanate; isocyanato ethyl methacrylate; methyl cellulose; hydroxyethyl cellulose; styrene or substituted styrenes; butadiene; ethylene; vinyl acetate or other vinyl esters; vinyl monomers such as vinyl chloride, vinylidene chloride, N-vinyl pyrrolidone; amino monomers such as N,N'-dimethylamino(meth)acrylate and acrylonitrile or methacrylonitrile. Most preferably, the latex comprises an acrylic polymer, a styrene/acrylic polymer, a styrene/butadiene polymer, a vinyl acetate/ethylene polymer, or polyvinyl acetate, or mixtures thereof. Other suitable polymers and specific examples of commercially available polymers are disclosed in US-A-4229224. Example of commercially available cement modifiers suitable for use in the manufacture of plates of the present invention include ACRONAL S400 available from BASF AG, DOW 460 available from Dow Chemical Company, RHOPLEX E-330 and RHOPLEX E-3083 available from Rohm and Haas Company, UCAR Latex 417 and Latex 429 available from Union Carbide Corp). The latex is generally stabilised by an anionic, cationic or nonionic surfactant in a conventional manner, though the use of a surfactant may also require the use of a defoamer for mixing in the concrete.

It will be appreciated that the polymeric additive may be derived from a monomer mix which is polymerized after the monomers have been incorporated into the fly ash and inert additive mix by, for example, either of the above two methods. Examples of such monomers include organic monomers such as epoxy monomers and isocyanate monomers.

In this specification, where the term "water in crystalline form" is used with reference to the composition of the present invention, the term is intended to indicate that the composition has cured to such an extent that the only water in the composition is that bound as hydrates of crystals in the composition. Where the term "water in liquid form" is used with reference to the composition of the present invention, the term is intended to indicate the composition has not yet undergone curing and that, consequently, some water may still evaporate from the composition or that the composition may be in a dough or slurry form.

The inert additives must have a particle size below 2 mm and preferably below 0.2 mm, depending upon the thickness of the layer of the composition of the invention to be applied to the substrate. Preferably, the inert additive is an inorganic pigment and is most preferably an iron oxide pigment. Inert inorganic fillers include barytes, slate dust, some forms of sand and other crushed inert minerals.

The compositions of the present invention can be used to cover the external surfaces of many building products, such as bricks and the precast concrete plates mentioned above. In addition, the compositions may be used as a stucco or as a plaster, being applied in any conventional manner.

The invention will now be more specifically described in terms of the following examples of some preferred embodiments which are given for the purposes of illustration only, and may be contrasted with the comparative tests also given below.

### Example I - Preparation of a control base plates.

A green concrete was made by mixing the following ingredients in a conventional manner:

| Ingredient | Parts by weight |
|---|---|
| #45 mesh (0.355 mm) builders sand | 300 |
| Type I Portland Cement | 100 |
| Water | 41 |

Round test patties were made by hand packing 170g of the green concrete into 90 mm petri dishes. The resulting patties were 13 mm thick.

### Example II - Preparation of a composition in accordance with the present invention

A composition of the present invention was prepared from the following ingredients:

| Ingredient | Parts by weight |
|---|---|
| Fly Ash, Class F | 100 |
| #100 mesh (0.15mm) builders sand | 50 |
| Bayferrox 318-M* | 10 |
| Rhoplex E-3083** | 21.3 |
| Additional water | 18.7 |

| | |
|---|---|
| * Bayferrox 318-M is a black iron oxide pigment available from Bayer AG. | |
| ** Rhoplex E-3083 is an acrylic latex polymer (47% solids) having a Tg of 32°C, and an average particle size of 90nm. | |

The dry ingredients were mixed for one minute, then the combined latex and water were added followed by 2 additional minutes of mixing.

### Example III - Preparation of a comparative composition

For comparative purposes, a composition was prepared from the following ingredients:

| Ingredient | Parts by weight |
|---|---|
| Cement, Type I Portland cement | 100 |
| #100 mesh (0.15mm) builders sand | 50 |
| Bayferrox 318-M* | 10 |
| Rhoplex E-3083** | 21.3 |
| Additional water | 23.7 |

| | |
|---|---|
| * Bayferrox 318-M is a black iron oxide pigment available from Bayer AG. | |
| ** Rhoplex E-3083 is an acrylic latex polymer (47% solids) having a Tg of 32°C, and an average particle size of 90nm. | |

The dry ingredients were mixed for one minute, then the combined latex and water were added followed by 2 additional minutes of mixing.

### Example IV - Preparation of precast concrete plates

Each of the compositions of Examples II and III were made to a similar low viscosity having the consistency of a slurry typically used in the slurry coating of roof tiles; it will be noted that the composition of the present invention had a lower water demand. Each slurry was then poured into the petri dish containing the green concrete of Example I and spread over the concrete by tipping the dish, thereby allowing the slurry to run to the edges of the dish. Gentle shaking gave the upper most surface a smooth finish. Enough slurry was used to give an average slurry thickness of 0.5 mm. Samples of the slurry-coated green concrete were then cured at 50 °C at 100% R.H. for 4 hours, then dried at 50°C for an additional 1 hour to form precast concrete plates.

### Example V - Clear coating of slurry

Some samples of the precast concrete plates formed in Example IV were then coated with an additional polymeric coating. This is frequently practiced, for example, to give higher gloss, and to protect the slurry surface. Duplicate precast concrete plates based on the slurries of Example 2 and Example 3 were spray coated with a conventional acrylic emulsion polymer (RHOPLEX AC-630 available from Rohm and Haas Company). Enough was used to give a dry film thickness of 0.8 - 1.0 mil (20 - 25 microns).

### Example VI - Efflorescence testing A

Certain precast concrete plates formed in Example IV, which had been cured at 50°C, and Example V were placed face down 10 cm above a water bath at 60°C for 96 hours. CIELAB values, L*, were measured before and after this treatment to indicate changes in darkness caused by efflorescence. Since evenness of color change is also important to appearance, a visual evaluation of blackness (1-10, 10= best) was also used. The results of these experiments are shown below:

| Precast Concrete Plate Sample | L* before | L* after | visual Before/After |
|---|---|---|---|
| Example III uncoated (Comparative) | 24.59 | 40.75 | 10/5 |
| Example III coated (Comparative) | 30.40 | 40.65 | 9/3 |
| Example II uncoated | 25.59 | 37.97 | 10/7 |
| Example II coated | 24.73 | 29.62 | 10/9 |

| | | | |
|---|---|---|---|
| L* values were measured using a Colorgard System 2000 colorimeter (BYK-Gardner INC) based on a scale of 0 = black to 100 = white. | | | |

Water bath treatment caused white spots (efflorescence) on the surface of the precast concrete plates comprising the slurry of Example III, even when clear coated. In contrast, no efflorescence was noted on the surface of the precast concrete plates comprising the slurry of Example II (of the present invention), the finish was darker and had a more even appearance.

### Example VII- Efflorescence testing B

Slurries formed from the compositions of Example III and Example II were spread to ca. 0.5 mm thickness in flat metal dishes. These were cured either at 50°C or 80°C at 100% RH for 4 hours and then dried for 1 hour at 50°C. A water spot was placed on the cured surfaces. Water penetration was evaluated based on speed of penetration and degree of wicking. Efflorescence was based on whiteness at the spot after all the water had dried. The results are shown below:

| Sample/Temperature (oC) | Water Resistance | Efflorescence |
|---|---|---|
| Example III/50 (Comparative) | 6 | 3 |
| Example III/80 (Comparative) | 8 | 7 |
| Example II/50 | 6 | 7 |
| Example II/80 | 10 | 9 |

When the compositions of the present invention are driven to a more complete cure, Example II/80, it is highly water impermeable and efflorescence resistant.

### Example VIII - Fly ash without polymer

A slurry was made like the slurry of Example II, except polymer was omitted and total water = 45 g. Under any of the cure conditions above, the dried slurry dusted on touch and had very little strength. Thus, the properties demonstrated above do not come from fly ash alone, but require the use of polymer.

## Claims

1. A composition, suitable for use in suppressing efflorescence, comprising:
a) fly ash comprising less than 30 % by weight lime;
b) polymeric additive having a Tg of above -40°C in an amount of from 5 to 30 % by weight polymer solids based on the total weight of fly ash;
c) water in crystalline or liquid form; and, optionally,
d) inorganic additive selected from inert filler and pigment in an amount of up to 50 % by weight based on the total weight of fly ash;
and wherein other than said fly ash, said composition consists essentially of no other pozzolanic or cementitious material.

2. The composition of claim 1, wherein the polymeric additive comprises a polymer having a Tg in range of from -20°C to 70°C.

3. The composition of claim 1, wherein the polymeric additive comprises an organic polymer polymerized from at least one or more of the following monomers: acrylic and methacrylic acid esters such as methyl(meth)acrylate, ethyl(meth)acrylate, butyl(meth)acrylate, 2-ethylhexyl(meth)acrylate, decyl(meth)acrylate, lauryl(meth)acrylate, isobornyl(meth)acrylate, isodecyl(meth)acrylate, oleyl(meth)acrylate, palmityl(meth)acrylate, steryl(meth)acrylate, hydroxyethyl(meth)acrylate and hydroxypropyl(meth)acrylate; acid functional monomers such as acrylic acid, methacrylic acid, crotonic acid, fumaric acid and maleic acid; mono-methyl itaconate; mono-methyl fumarate; monobutyl fumarate; maleic anhydride; acrylamide or substituted acrylamides; diacetone acrylamide; glycidyl methacrylate; acetoacetoxyethylmethacrylate; acrolein and methacrolein; dicyclopentadienyl methacrylate; dimethyl meta-isopropenyl benzyl isocyanate; isocyanato ethyl methacrylate; methyl cellulose; hydroxyethyl cellulose; styrene or substituted styrenes; butadiene; ethylene; vinyl acetate or other vinyl esters; vinyl monomers such as vinyl chloride, vinylidene chloride, N-vinyl pyrrolidone; amino monomers such as N,N'-dimethylamino(meth)acrylate and acrylonitrile or methacrylonitrile.

4. The composition of claim 3, wherein the polymeric additive is selected from the group consisting of an acrylic polymer, a styrene/acrylic polymer, a styrene/butadiene polymer, a vinyl acetate/ethylene polymer, or polyvinyl acetate, and mixtures thereof.

5. The composition of claim 1, wherein the polymeric additive is present in an amount of from 5 to 15% by weight polymer solids based on the total weight of fly ash.

6. A method for suppressing efflorescence on the surface of a mineral substrate, which method comprises
i) applying an aqueous composition comprising:
a) fly ash comprising less than 30 % by weight lime;
b) polymeric additive having a Tg of above -40°C in an amount of from 5 to 30 % by weight polymer solids based on the total weight of fly ash;
c) water in liquid form; and, optionally,
d) inorganic additive selected from inert filler and pigment in an amount of up to 50 % by weight based on the total weight of fly ash;
and wherein other than said fly ash, said composition consists essentially of no other pozzolanic or cementitious material; to at least one surface of said substrate and in such an amount that said composition forms a continuous layer having a thickness of from 0.05 mm to 3 mm over said substrate, and
ii) curing said composition until all the water in liquid form has evaporated or become water in crystalline form.

7. The method of claim 6, wherein curing of the composition is effected at a temperature of at least 50°C.

8. The method as claimed in claim 7, wherein curing of the composition is effected at a temperature of from 70 to 90°C.

9. A precast concrete plate comprising at least one layer formed from a green concrete and an uppermost layer having a thickness of from 0.05 mm to 3 mm of formed from a composition comprising:
a) fly ash comprising less than 30 % by weight lime;
b) polymeric additive having a Tg of above -40°C in an amount of from 5 to 30 % by weight polymer solids based on the total weight of fly ash;
c) water in crystalline or liquid form; and, optionally,
d) inorganic additive selected from inert filler and pigment in an amount of up to 50 % by weight based on the total weight of fly ash;
wherein other than said fly ash, said composition consists essentially of no other pozzolanic or cementitious material.

10. A roof tile comprising at least one layer formed from a green concrete and an uppermost layer having a thickness of from 0.05 mm to 3 mm of formed from a composition comprising:
a) fly ash comprising less than 30 % by weight lime;
b) polymeric additive having a Tg of above -40°C in an amount of from 5 to 30 % by weight polymer solids based on the total weight of fly ash;
c) water in crystalline form; and, optionally,
d) inorganic additive selected from inert filler and pigment in an amount of up to 50 % by weight based on the total weight of fly ash;
wherein other than said fly ash, said composition consists essentially of no other pozzolanic or cementitious material.
